# EUROPEAN PATENT SPECIFICATION

(11) **EP 3 378 773 B1**
(45) Date of publication and mention of the grant of the patent: **03.11.2021**
(21) Application number: 17161966.1
(22) Date of filing: 21.03.2017
(51) Int. Cl.: B64D 17/80, B64D 25/00

(54) **PARACHUTE RESCUE SYSTEM**
FALLSCHIRMRETTUNGSSYSTEM
SYSTÈME DE SECOURS À PARACHUTE

(43) Date of publication of application: 26.09.2018
(73) Proprietor: FLARIS Spolka z ograniczona odpowiedzialnoscia, 58-560 Jelenia Gora (PL)
(72) Inventor: Ladzinski, Rafal, 58-560 Jelenia Gora (PL)
(74) Representative: Budzinski, Slawomir

(56) References cited:
- AT-B- 410 537
- CN-A- 103 832 591
- CZ-A3- 9 401 859
- DE-A1- 4 208 839
- LU-A2- 91 777
- US-A- 3 622 108
- US-A- 4 033 528

## Description

The object of the invention is a light aircraft with a jet engine mounted on a fuselage and comprising a parachute rescue system.

Safety is the most important issue in flights. Ultralight aircrafts are considered by large numbers of pilots to be safe structures. However, sometimes, unpredictable situations can happen.

As a result of accumulation of various negative factors, dangerous situations which can be hazardous to life or health of the pilot can possibly occur. When a failure of the aircraft or other factors prevent the machine from safe landing, the only rescue for the crew is to use parachutes. Then, pilots and passengers leave the aircraft and land individually. In the case of ultralight aircrafts, due to their low mass, it is possible to use a parachute to rescue the machine with the crew. The parachute is mounted to the aircraft and allows landing of the whole unit together with the crew, without having to leave the aircraft. The parachute is installed in the fuselage in a place designed thereto. Usually, it is packed into a bag made of a special material and protected from moisture and dust. In the case of aircrafts with non-built-over cabin having a frame structure, the parachute for the aircraft is packed into a cylindrical container.

A parachute rescue system of AEROPRAKT-22 ultralight aircraft is known. The system contains a parachute, packed into a backpack. The backpack is mounted to a support frame behind the trunk on the right side of the fuselage. The system is activated by pulling a handle grip connected to a cord to a rocket. The rocket is connected to the cord to a buckle pulling out the parachute canopy and a ring to which main ropes are attached, the main ropes being anchored at fixing points to the fuselage structure. By pulling the grip upwards on the console, the rocket is launched. Launching of the rocket causes extraction of a special piece of the aircraft plating, whereby an opening in the fuselage plating is created, and the rocket pulls out the parachute canopy through the opening. After activation of the system, the aircraft is suspended in three points and so, in a stable position, it can descend towards the ground.

A parachute rescue system from Ballistic Recovery Systems, Inc. is known. The system is usually mounted in the aircraft luggage compartment, specially reinforced and prepared for this purpose, and is activated by a pneumatic system or by a rocket engine for solid fuel when the pilot pulls a suitable handle arranged in the cockpit. The launched rocket releases the parachute in less than 1 second. The degree of opening of the parachute canopy depends on the speed of the aircraft. At high speeds, it usually opens in only 25 percent in the first few seconds till a sufficient decrease in the flight speed so that it could be opened completely.

A parachute rescue system is known from Czech patent document CZ 285318, in which the rescue parachute for the aircraft is arranged in a container with a removable lid. The container is mounted in the aircraft. It is recommended to place it in the rear part of the aircraft structure, although other mounting locations for the container are possible, even outside of the aircraft. On the container, there is a rocket connected to the parachute canopy. The engine of the rocket is mounted to the container and is connected with a cord to a handle located within the reach of the pilot in the aircraft cockpit.

Rescue systems of light sport and business aircrafts with propeller drives are known which operate in such a way that a parachute arranged in a container in the fuselage is, in case of use, pulled out from the aircraft by means of the rocket. This allows opening of the parachute at a significant distance from the aircraft, without exposing it to the contact with protruding elements of the aircraft, such as wings, tail, propeller. Contact or collision with the aforementioned can cause damage to the canopy or entanglement of parachute cords, and as a result can prevent complete opening thereof. Contact with a rotating propeller is particularly dangerous for the opening parachute. It carries the risk of cutting the parachute cords or of winding the cords onto the propeller hub and its blades.

In the case of aircrafts with a jet engine, such as disclosed in CN 103 832 591 A, the operating engine poses a risk of pulling the parachute into the engine inlet, in case of arranging the container with the parachute before the engine, and consequently, a failure of the system. For these reasons, the container with the parachute is mounted behind the engine towards the back of the aircraft.

Such an arrangement cannot be used in a jet aircraft the engine of which is arranged on the fuselage in its rear part.

The object of the invention is to provide a parachute rescue engine effective and safe for a light aircraft, in particular with a jet engine mounted on the fuselage.

According to the invention, a light aircraft is defined by claim 1, embodiments thereof being defined by the dependent claims.

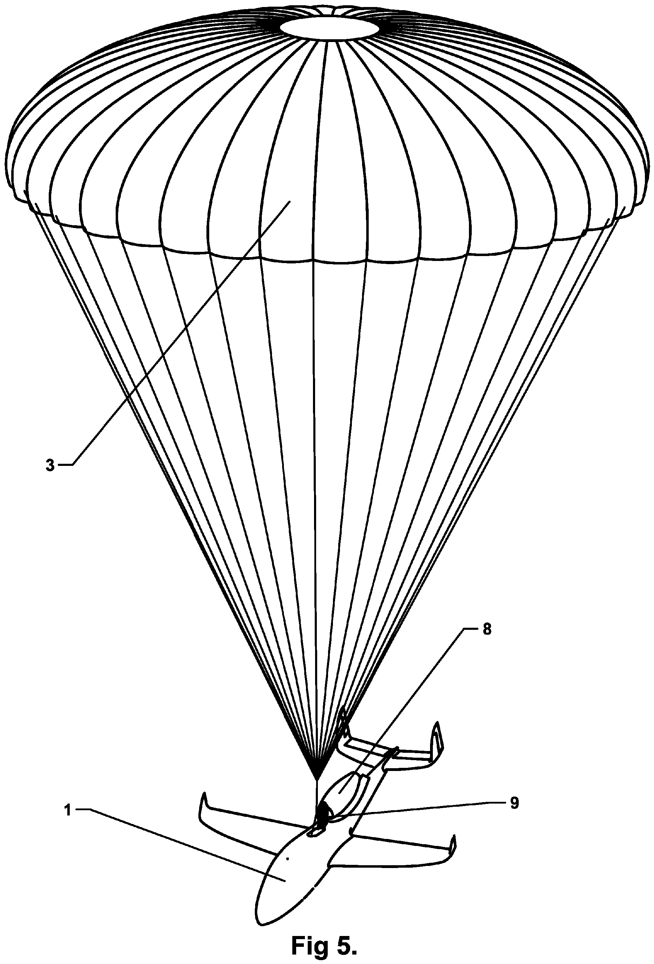

The object of the invention is presented in embodiments in the drawing, in which Fig. 1 shows an aircraft with the marked closed container for the parachute in a side view, Fig. 2 shows an aircraft with the opened lid of the container in a side view, Fig. 3 shows an aircraft in a ¾ perspective view from the top at the time of pulling the parachute out of the container by the dragging rocket, Fig. 4 shows a parachute rescue system with the opened lid of the container, just before launching the dragging rocket, and Fig. 5 shows an aircraft with the opened parachute canopy in a ¾ perspective view from the top.

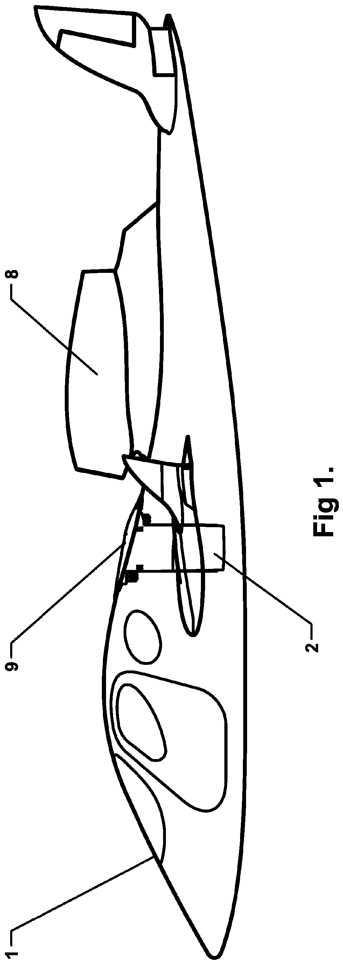

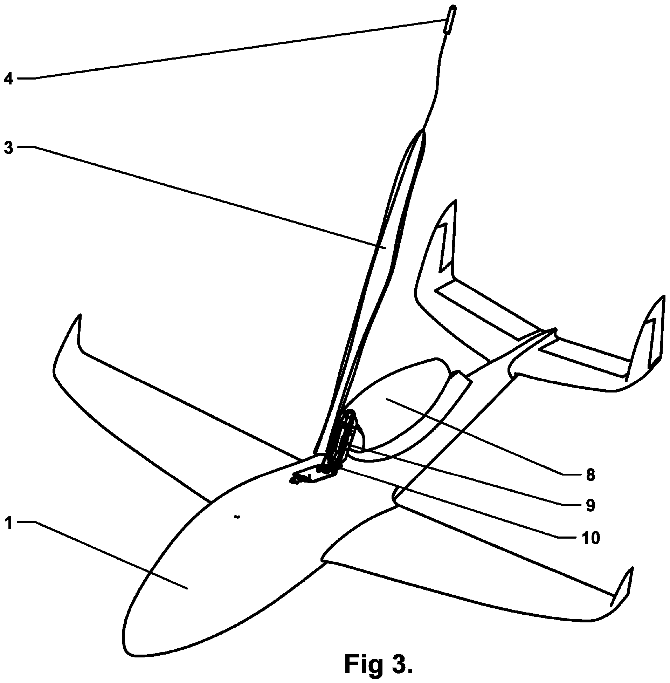

As shown in Fig. 1, Fig. 2, Fig. 3 and Fig. 4, the parachute rescue system of a light aircraft 1 with a jet engine 8 mounted in the aircraft 1 fuselage comprises a parachute 3 arranged in a container 2 provided at the top with an openable lid 9 constituting part of the plating of the aircraft 1 fuselage. On the lid 9, from the inner side, a dragging rocket 4 connected to the parachute canopy 2 is mounted. The parachute 3 is connected to the aircraft 1 structure. The fuse of the dragging rocket 4 is activated through the rocket's tension member 5, connected to a handle 6 mounted in a chassis 7 inside the aircraft 1. The container 2 with the parachute 3 is arranged in the aircraft 1 fuselage upstream of the inlet of air into the jet engine 8. The lid 9 of the container 2 is rotatably mounted at its rear edge 10. In this embodiment of the invention, the rotary mounting of the lid 9 on its rear edge 10 constitutes a hinge connection. It is obvious that in other embodiments of the invention, other known solutions of hinge connection for the connection of the lid 9 to the container 2 can be used. The distance between the rear edge 10 of the lid 9 and the inlet of air into the jet engine 8 is smaller that the length of the lid 9 in the longitudinal direction.

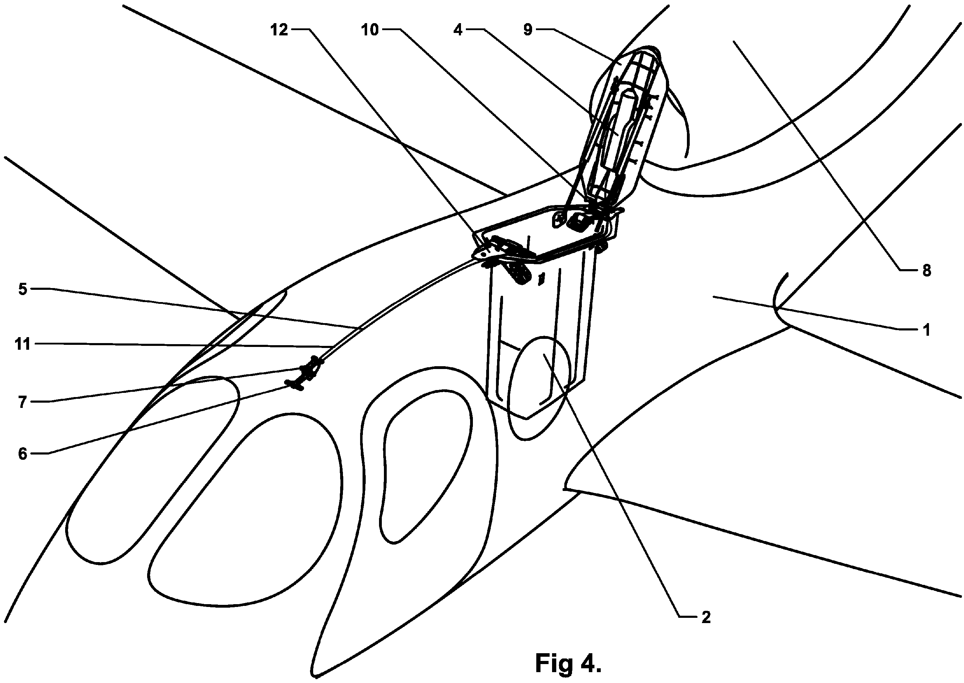

A mechanism for opening the lid 9 is activated from inside of the aircraft 1. This mechanism comprises a lid tension member 11 connecting a lid lock 12 to the handle 6 mounted in the chassis 7. In an embodiment of the invention, shown in Fig. 4, the same handle 6 mounted in the chassis 7 is also used to activate the fuse of the dragging rocket 4. The structure for mounting the handle 6 in the chassis, in this case, must ensure successively: first, opening of the lid 9 of the container 2, and then launching of the dragging rocket 4. Of course, in other embodiments of the invention, it is possible to use two independent mechanisms: one to open the lid 9 of the container 2, and the other to launch the dragging rocket 4.

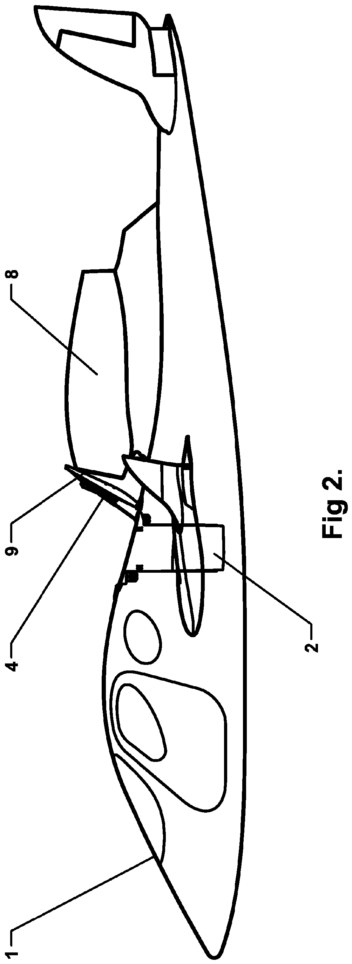

After opening of the container 2, the lid 9 forms an angle of 110° - 130° with the surface of the aircraft 1 fuselage. In an embodiment of the invention, shown in Fig. 2, after opening of the container 2, the angle which is formed between the lid 9 and the surface of the aircraft 1 fuselage is 120°. Since the dragging rocket 4 is mounted on the lid 9 along the longitudinal axis of the lid 9, after opening of the container 2, the angle which is formed between the lid 9 and the surface of the aircraft 1 fuselage is the angle at which the dragging rocket 4 is launched in relation to the surface of the aircraft 1 fuselage, and therefore it is the angle at which the parachute 3 canopy is removed from the container 2. Angle of 120° is the optimum angle.

At the time of activating the parachute rescue system in the aircraft 1, the lid 9 opens rearward, covering at the same time the inlet of air into the jet engine 8. Then, the dragging rocket 4 mounted on the inner side of the openable lid 9 is launched and drags the parachute canopy 3 outside of the container 2 above the surface of the aircraft 1. Covering the inlet of air into the jet engine 8 by the lid 9 assures safe removal of the parachute canopy 3 from the container 2 above the aircraft 1, which as a result allows its proper opening at the right moment.

Thanks to the rotary mounting of the lid to the container 2 on its rear edge 10 and the use of the lid 9 for covering the inlet of air into the jet engine 8, it is possible to arrange the container 2 with the parachute 3 in an approximately central part of the aircraft 1 fuselage with the jet engine 8 mounted on the aircraft 1 fuselage in its rear part. Therefore, a light aircraft with a jet engine 8 mounted on the fuselage may be provided with a parachute rescue system, similarly to other light propeller aircrafts 1.

## Claims

1. A light aircraft (1) comprising a fuselage, with a jet engine (8) mounted on the fuselage, and a parachute rescue system comprising a parachute (3) arranged in the fuselage in a container (2) with a lid (9), wherein the container (2) with the parachute (3) is arranged in the fuselage upstream of an inlet of air into the jet engine (8) and is provided at the top with an openable lid (9) constituting part of the plating of the outer fuselage, and a mechanism for opening the lid (9) being arranged inside the fuselage, **characterised in that** the parachute rescue system comprises a dragging rocket (4) for the parachute connected to the parachute (3), wherein a fuse of the rocket (4) is connected by a tension member (5) to a handle (6) mounted inside the fuselage, wherein the lid is rotatably mounted at its rear edge (10) to the container (2), and wherein the dragging rocket (4) for the parachute (3) is mounted on an inner side of the lid (9), inside the fuselage in the closed position of the lid (9).

2. The light aircraft according to claim 1, **characterised in that** the distance between the rear edge (10) of the lid (9) and the inlet of air into the jet engine (8) is smaller than the length of the lid (9) in the longitudinal direction.

3. The light aircraft according to claim 1, **characterised in that** the lid (9), in the open position of the container (2), forms an angle of 110° - 130° with the surface of the fuselage.

4. The light aircraft according to claim 3, **characterised in that,** in the open position of the container (2), the angle which is formed between the lid (9) and the surface of the fuselage is 120°.

5. The light aircraft according to claim 1, **characterised in that** the mechanism for opening the lid (9) comprises a lid tension member (11) which connects a lid lock (12) to the handle (6) for activating the fuse of the dragging rocket (4) mounted in a chassis (7).

6. The light aircraft according to claim 1, **characterised in that** the rotary mounting of the lid (9) at its rear edge (10) constitutes a hinge connection.

## Patentansprüche

1. Leichtflugzeug (1) mit einem Rumpf und mit einem am Rumpf montierten Düsentriebwerk (8) und einem Fallschirmrettungssystem, mit einem Fallschirm (3), der im Rumpf in einem Behälter (2) mit einem Deckel (9) untergebracht ist, wobei der Behälter (2) mit dem Fallschirm (3) sich im Rumpf aufwärts des Lufteinlasses in das Düsentriebwerk (8) befindet und oben mit einem sich öffnenden Deckel (9) versehen ist, der in die Außenhaut des äußeren Rumpfes integriert ist, und mit einem Mechanismus zum Öffnen des Deckels (9) innerhalb des Rumpfes, **dadurch gekennzeichnet, dass** das Fallschirmrettungssystem eine Trägerrakete (4) für den Fallschirm umfasst, die mit dem Fallschirm (3) verbunden ist, wobei der Zünder der Rakete (4) durch ein Zugseil (5) mit einem Griff (6) verbunden ist, der sich im Inneren des Rumpfes befindet, wobei der Deckel an seinem hinteren Rand (10) drehbar an dem Behälter (2) montiert ist, wobei die Trägerrakete (4) für den Fallschirm (3) an der Innenseite des Deckels (9) installiert ist, innerhalb des Rumpfes in der geschlossenen Position des Deckels (9).

2. Ein Leichtflugzeug nach Anspruch 1, **dadurch gekennzeichnet, dass** der Abstand zwischen der Hinterkante (10) des Deckels (9) und dem Lufteinlass in das Düsentriebwerk (8) kleiner ist als die Länge des Deckels (9) in der Längsrichtung.

3. Ein Leichtflugzeug nach Anspruch 1, **dadurch gekennzeichnet, dass** der Deckel (9) in der geöffneten Stellung des Behälters (2) einen Winkel von 110° - 130° zu der Oberfläche des Rumpfes bildet.

4. Ein Leichtflugzeug nach Anspruch 3, **dadurch gekennzeichnet, dass** in der offenen Stellung des Behälters (2) der Winkel, der zwischen dem Deckel (9) und der Oberfläche des Rumpfes entsteht, 120° beträgt.

5. Ein Leichtflugzeug nach Anspruch 1, **dadurch gekennzeichnet, dass** der Mechanismus zum Öffnen des Deckels (9) ein Zugelement (11) umfasst, das das Deckelschloss (12) mit dem Griff (6) zum Auslösen des Zünders der Trägerrakete (4) in der Kabine (7) verbindet.

6. Ein Leichtflugzeug nach Anspruch 1, **dadurch gekennzeichnet, dass** die drehbare Befestigung des Deckels (9) an seiner Hinterkante (10) aus Scharnieren ausgeführt ist.

## Revendications

1. Avion léger (1) comprenant un fuselage, avec un moteur à réaction (8) monté sur le fuselage, et un système de secours à parachute comprenant un parachute (3) disposé dans le fuselage dans un conteneur (2) avec un couvercle (9), le conteneur (2) avec le parachute (3) étant disposé dans le fuselage en amont d'une entrée d'air dans le moteur à réaction (8) et étant pourvu, en partie supérieure, d'un couvercle ouvrant (9) faisant partie du placage de l'extérieur fuselage, et un mécanisme d'ouverture du couvercle (9) étant disposé à l'intérieur du fuselage, **caractérisé en ce que** le système de secours à parachute comprend une fusée traînante (4) pour le parachute reliée au parachute (3), une mèche de la fusée (4) étant reliée par un élément de tension (5) à une poignée (6) montée à l'intérieur du fuselage, le couvercle étant monté rotatif à son bord arrière (10) sur le conteneur (2), et la fusée d'entraînement (4) pour le parachute (3) étant montée sur un côté intérieur du couvercle (9), à l'intérieur du fuselage en position fermée du couvercle (9).

2. Avion léger selon la revendication 1, **caractérisé en ce que** la distance entre le bord arrière (10) du couvercle (9) et l'entrée d'air dans le moteur à réaction (8) est inférieure à la longueur du couvercle (9) en la direction longitudinale.

3. Avion léger selon la revendication 1, **caractérisé en ce que** le couvercle (9), en position ouverte du conteneur (2), forme un angle de 110° - 130° avec la surface du fuselage.

4. Avion léger selon la revendication 3, **caractérisé en ce que,** en position ouverte du conteneur (2), l'angle qui est formé entre le couvercle (9) et la surface du fuselage est de 120°.

5. Avion léger selon la revendication 1, **caractérisé en ce que** le mécanisme d'ouverture du couvercle (9) comprend un organe de tension de couvercle (11) qui relie un verrou (12) de couvercle à la poignée (6) pour l'activation de la mèche de la fusée traînante. (4) monté dans un châssis (7).

6. Avion léger selon la revendication 1, **caractérisé en ce que** le montage rotatif du couvercle (9) à son bord arrière (10) constitue une liaison charnière.
